# EUROPÄISCHE PATENTSCHRIFT

(11) **EP 1 839 475 B1**
(45) Veröffentlichungstag und Bekanntmachung des Hinweises auf die Patenterteilung: **20.09.2017**
(21) Anmeldenummer: 07003500.1
(22) Anmeldetag: 20.02.2007
(51) Int. Cl.: A01C 23/00, B60P 3/22

(54) **Tankfahrzeug**
Tanker
Véhicule citerne

(30) Priorität: 01.04.2006 DE 202006005307 U
(43) Veröffentlichungstag der Anmeldung: 03.10.2007
(73) Patentinhaber: Zunhammer, Sebastian, 83301 Traunreut (DE)
(72) Erfinder: Zunhammer, Sebastian, 83301 Traunreut (DE)
(74) Vertreter: Heilein, Ernst - Peter

(56) Entgegenhaltungen:
- EP-A1- 1 486 401
- GB-A- 1 338 288
- US-A1- 2005 115 795

## Beschreibung

Die vorliegende Erfindung bezieht sich auf einen als Tankfahrzeug ausgebildeten landwirtschaftlichen Anhänger, insbesondere auf einen Tankfahrzeug gemäß dem Oberbegriff des Anspruchs 1.

Die US 62 06 252 B1 zeigt und beschreibt ein Nutzfahrzeug mit einer Heckklappe, die als Flüssigkeitsbehälter ausgebildet ist. Speziell soll die als Flüssigkeitsbehälter ausgebildete Heckklappe als Trinkwasserbehälter in einem Fahrzeug dienen, mit dem lange Reisen unternommen werden.

In der DE 83 13 083 U1 ist ein landwirtschaftliches Gespann beschrieben, bestehend aus einem Schleppfahrzeug mit einem einachsigen Anhänger, welches über eine spezielle Anhängevorrichtung miteinander verbunden ist. Der Anhänger weist im Wesentlichen einen Fahrzeugrahmen, eine Deichsel und einen Flüssigkeitstank auf.

In der DE 9 66 154 B ist ein motorisch angetriebenes landwirtschaftliches Fahrzeug beschrieben, welches einen Fahrzeugrahmen aufweist, der aus rohrförmigen Abschnitten besteht, die rechtwinklig zusammengesetzt sind. Dieser Fahrzeugrahmen kann mit den unterschiedlichsten Aufbauten versehen werden, auch mit einem Flüssigkeitsbehälter, welcher Jauche enthält.

Aus der DE 196 34 372 Cl ist eine Vorrichtung zum bodennahen Ausbringen von Gülle bekannt, bei dem ein Verteilerrohr beschrieben ist, welches an seinen beiden Enden angeordnete Räder aufweist. Mit Hilfe eines rohrartigen Kupplungskopfes, der zugleich als Anhängedeichsel dient, kann die Ausbringvorrichtung nach Art eines Anhängers an den Gülleauslaß eines Gülletankwagens angekoppelt werden.

Gülletankwagen sind als Selbstfahrer oder Anhänger hinlänglich bekannt. Ein Gülletankwagen ist beispielsweise in der DE 198 25 459 A1 beschrieben. Bei dem dort erläuterten Gegenstand handelt es sich um einen Gülleanhänger mit einer Kombination von Vakuumpumpe und Kreiselpumpe. Da in jener Druckschrift im Wesentlichen die Zusammenschaltung der beiden Pumpen beschrieben wird, ist über den mechanischen Aufbau des Anhängers explizit nicht viel ausgesagt. Den Zeichnungen ist aber ohne Weiteres zu entnehmen, dass es sich um einen Anhänger mit Tandemachse handelt, und dass der Tank auf einem Rahmen aufliegt, an welchen eine Deichsel angeflanscht ist. Die Rohrleitungen zum Fördern der Gülle verlaufen im Wesentlichen außerhalb des Tanks und zumindest eine Druckleitung verläuft unterhalb des Tanks und unterhalb des Rahmens von der Kreiselpumpe zum rückwärtigen Verteiler. Aus der Figur 2 jener Druckschrift ist ein Teil dieses Förderrohrs zu erkennen und es ist ersichtlich, dass dieses Rohr mehrfach gekrümmt sein muss, um unterhalb des Fahrzeugs verlegt sein zu können. Derartige Rohrleitungsführungen sind im gesamten Stand der Technik vorzufinden und neben einer aufwändigen Konstruktion und Ausführung sind derartige Rohrleitungsführungen auch nachteilig im Hinblick auf die Geländegängigkeit des Anhängers, da die Bodenfreiheit stark eingeschränkt ist.

Eine ganz besondere Bauform eines Güllefahrzeugs findet sich in der DD 256 445 A1. In jener Druckschrift wird die Problematik abgehandelt, die beim Ausbringen großer Mengen von Gülle auf Feldern auftritt. Bei großen Güllemengen ist das Gewicht des Güllefahrzeugs zwangsläufig ebenfalls groß. Die Folge sind hohe Bodendrücke denen besonders üppige Bereifung der Ausbringfahrzeuge entgegengesetzt wird. Um derart teure Bereifung zu vermeiden wird in der DD 256 445 A1 vorgeschlagen, dass Güllefahrzeug selbst als hohle Walze auszubilden, deren Inneres die Gülle aufnimmt und die über ihren Umfang mit geringem Bodendruck direkt auf den zu düngenden Boden abrollt. Ein gabelförmiger Zugrahmen ist axial in den Naben der Walze angeordnet und dient der Ankopplung an ein Zugfahrzeug. Die Zuführung der Gülle zum Befüllen der Walze erfolgt über eine abgedichtete Durchführung in einer Nabe auf einer Seite der Güllewalze und die Ausbringung erfolgt ebenfalls durch eine abgedichtete Leitung, die durch eine Nabe auf der anderen Seite der Güllewalze ins Innere geführt ist. Zur Befüllung und zum Ausbringen dienen jeweils Unterdruck bzw. Überdruck. Für den Straßentransport der Güllewalze ist diese mit hydraulisch ausfahrbaren Stützrädern versehen. Der Transportbehälter dieses Güllefahrzeugs ist also ein Rollkörper, der einen Rahmen zur Halterung von Stützrädern und zum Ankoppeln an ein Zugfahrzeug aufweist.

Schließlich ist in der US 28 89 994 ein Gerät beschrieben, mit dem Flüssigdünger auf Grünflächen verteilt werden soll. Dazu wird ein Rohrgestell vorgeschlagen, welches mit zwei Rädern versehen ist, damit es über die Grünfläche geschoben werden kann. Das Rohrgestell bildet zwischen den Rädern eine Art hohles Achsrohr und ist an seinem den Rädern fernen Ende mit einem Anschluss für eine Wasserleitung verbunden. Aufgrund des an sich bekannten Venturi-Effekt wird flüssiges Düngemittel, welches sich in einem Behälter am Rohrgestell befindet, durch in dem Rohrgestell fließendes Wasser aus dem Behälter gesaugt, mit dem Wasser vermischt und mit Hilfe des hohlen Achsrohr auf der Grünfläche ausgebracht.J Darüber hinaus ist aus der GB 1 338 288 A ein Gülleanhänger bekannt, bei dem ein Gülletank an seiner Unterseite in einen zum Gülletank hin offenen Kanal mündet, in welchem Gülle fließen kann. Der offene Kanal ist dabei Bestandteil des Fahrzeugrahmens. Aufgabe der vorliegenden Erfindung ist es, ein Gülletankfahrzeug zu schaffen, bei dem der konstruktive und der herstellungstechnische Aufwand gegenüber dem Stand der Technik geringer ist, das eine geringere Masse aufweist und geländetauglicher ist, als die Fahrzeuge gemäß dem Stand der Technik.

Diese Aufgabe wird durch einen Tankfahrzeug mit den Merkmalen des Anspruchs 1 gelöst. Vorteilhafte Ausgestaltungen des erfindungsgemäßen Fahrzeugs finden sich in den abhängigen Ansprüchen.

Die besonderen Vorteile des erfindungsgemäßen Tankfahrzeugs liegen im einfachen und robusten Aufbau, in der Platz und Gewicht sparenden Ausführung sowie in der guten Bodenfreiheit. Vorteilhaft ist ein Tankfahrzeug, insbesondere ein Gülleanhänger mit einem Gülletank, einem Fahrgestell zur Aufnahme von zumindest Achsen, Rädern, Deichsel und Gülletank, wenn das Fahrgestell aus einem von Hohlkörpern gebildeten Rahmen besteht,
wenn die Hohlkörper Rohre sind,
wenn der Rahmen aus den Rohren flüssigkeitsdicht zusammengesetzt ist,
wenn zumindest in einem Teil der Hohlkörper Gülle förderbar ist, welches mit dem Tankfahrzeug transportiert wird,
- und wenn die Hohlkörper
- Rohre sind, welche unmittelbar als Förderleitungen dienen, oder
- in ihrem Innern korrosionsfeste Innenrohre oder Schläuche aufweisen.

Weiterhin ist es vorteilhaft, wenn der Rahmen aus den Rohren flüssigkeitsdicht zusammengesetzt, nämlich geschweißt ist.

Besonders vorteilhaft ist es, wenn die Rohre korrosionsfest beschichtet sind.

Besonders günstig ist ein Tankwagen, wenn dessen Rahmen aus Längsholmen und Quertraversen besteht, deren Hohlräume zumindest teilweise miteinander verbunden sind.

Sehr vorteilhaft ist ein Gülleanhänger ausgestaltet, wenn eine Güllepumpe derart an dem zur Förderung der Gülle dienenden Hohlkörper angeflanscht ist, dass die Förderung der Gülle über die Güllepumpe direkt im Rahmen erfolgt.

Bei einem derartigen Tankwagen ist es besonders günstig, wenn die Güllepumpe mittels eines Anschlussflanschs an den Hohlkörper angeflanscht ist, und wenn der Anschlussflansch gleichzeitig als Pumpenträger fungiert.

Es kann vorteilhaft sein, zwischen dem Hohlkörper und der Güllepumpe wenigstens ein elastisches Element anzuordnen.

Des Weiteren kann vorteilhaft sein, wenn die Güllepumpe direkt an den Hohlkörper angeflanscht ist, und dass der Rahmen gleichzeitig als Pumpenträger fungiert.

Ferner ist ein Tankfahrzeug für Gülle vorteilhaft, wenn Mehrwegventile zur Steuerung des Gülleflusses vorhanden sind, und dass die Ventile unmittelbar auf dem Rahmen oder an einer Pumpe angeordnet sind. Mehrwegventile können auch durch mehrere einzelne Absperrschieber ersetzt sein, was nicht extra zeichnerisch dargestellt ist.

Die vorliegende Erfindung eignet sich insbesondere für Tankfahrzeuge, welche als ein- oder mehr-achsiger Anhänger ausgebildet sind.

Mit Hilfe eines Ausführungsbeispiels wird die Erfindung nachstehend anhand der Zeichnungen noch näher erläutert.

Es zeigt
Figur 1 einen Gülletankwagen in Seitenansicht;
Figur 2 ein Fahrgestell eines Gülletankwagens in Seitenansicht;
Figur 3 ein Fahrgestell in räumlicher Darstellung;
Figur 4 ein Fahrgestell in Draufsicht;
Figur 5 einen vergrößerten Ausschnitt des Fahrgestell-Vorder-teils;
Figur 6 einen vergrößerten Ausschnitt des Fahrgestell-Hecks und
Figur 7 eine Variante eines Fahrgestells gemäß Figur 5.

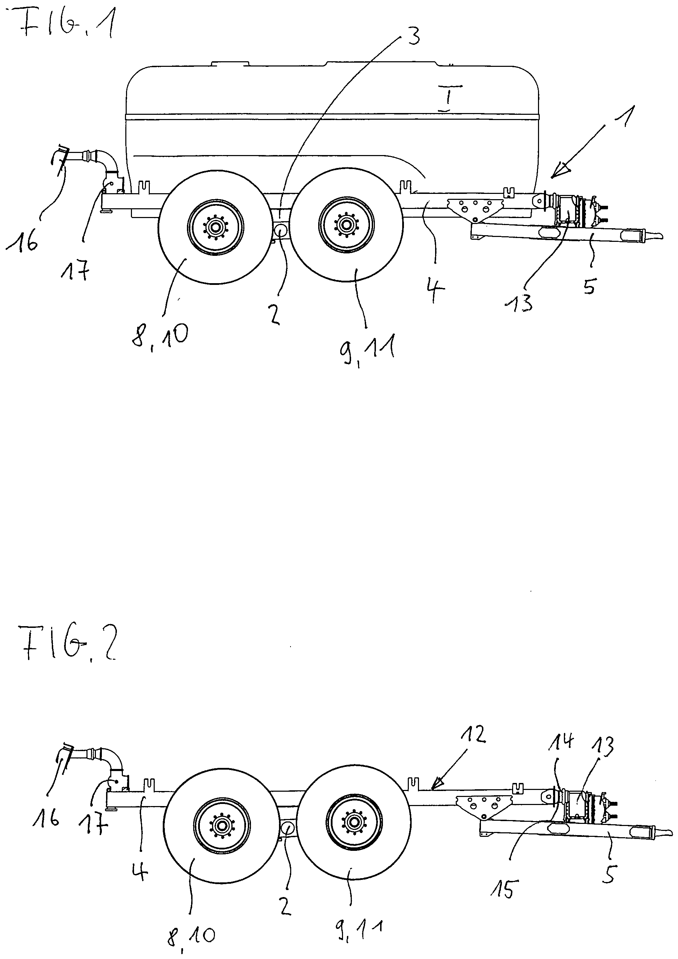

In Figur 1 ist ein Gülletankwagen 1 in Seitenansicht dargestellt. Das Ausführungsbeispiel zeigt einen Gülletankwagen 1 in der Ausführung als zweiachsiger Anhänger mit einer so genannten Tandemachse 2. Die Tandemachse 2 ist mit Achsträgern 3 an einem Rahmen 4 befestigt. Im vorderen Bereich des Rahmens 4 befindet sich eine Deichsel 5, mit der der Tankwagen 1 an einem nicht dargestellten Zugfahrzeug angekoppelt werden kann.

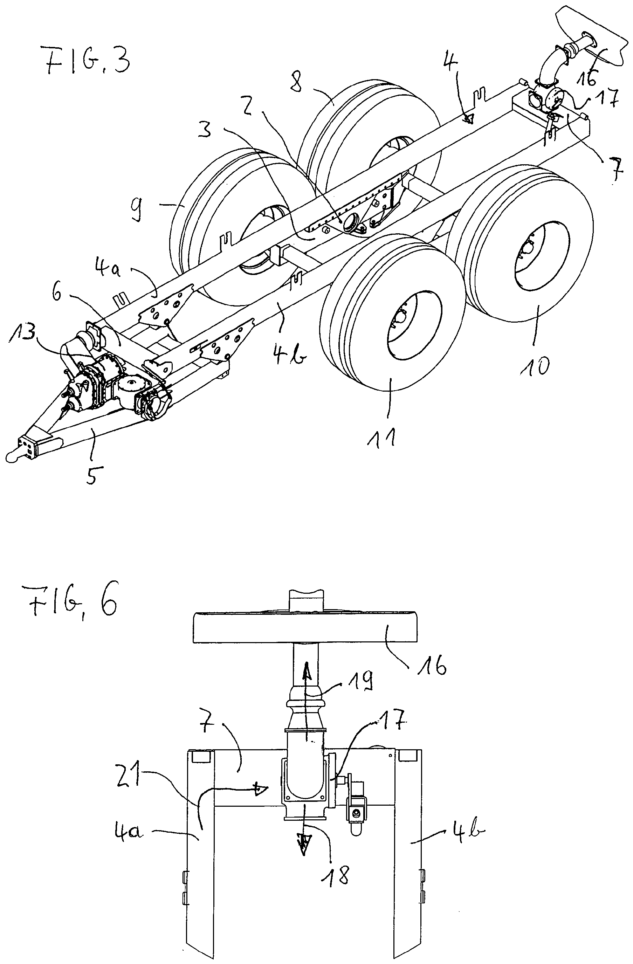

Wie später noch in den Figuren 3 bis 6 zu erkennen sein wird, ist der Rahmen 4 als Rohrrahmen ausgebildet und weist zwei parallele hohle Längsholme 4a, 4b auf, die an ihren Enden durch ebenfalls hohle Quertraversen 6 und 7 miteinander verbunden sind. Zusammen mit der Tandemachse 2, den Rädern 8, 9, 10, 11 und der Deichsel 5 bildet der Rahmen 4 ein Fahrgestell 12. Zentrisch zu den Längsholmen 4a und 4b ist der Gülletank T auf dem Fahrgestell 12 angeordnet.

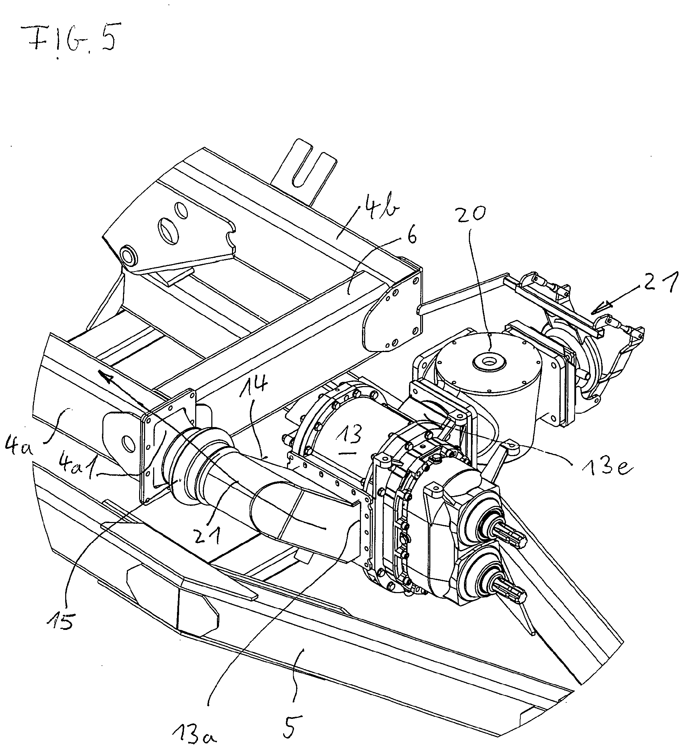

Figur 2 zeigt das Fahrgestell 12 des Gülletankwagens 1 ohne Tank T. Im vorderen Bereich ist in der Nähe der Deichsel 5 eine Pumpe 13 zur Förderung der Gülle G angeordnet. Diese Pumpe 13 kann als Kreiselpumpe oder Verdrängerpumpe ausgeführt sein, aber auch andere Bauformen sind möglich. In vorteilhafter Weise ist die Pumpe 13 an einem der Längsholme 4a mittels Anschlussflansch 14 direkt angeflanscht. Der Längsholm 4a ist an seiner Stirnseite 4a1 offen, so dass eine Austrittsöffnung 13a der Pumpe 13 der offenen Stirnseite 4a1 des Längsholms 4a direkt gegenüberliegt und eine Förderung der Gülle G durch die Pumpe 13 unmittelbar in den Längsholm 4a erfolgen kann. Bei der mechanischen Verbindung der Pumpe 13 und dem Längsholm 4a mittels Anschlussflansch 14 kann ein elastisches Element 15 zwischengeschaltet sein, das sowohl niederfrequente Schwingungen als auch höherfrequente Vibrationen aufnimmt und zusätzlich die Verbindung zwischen Pumpe 13 und Längsholm 4a abdichtet. Einzelheiten sind in der Figur 5 besser zu erkennen. Das Heck des Fahrgestells 12 trägt eine Vorrichtung 16 zum Ausbringen der Gülle G, worauf bei der Beschreibung der Figuren 3 und 6 noch Bezug genommen wird.

Figur 3 zeigt in räumlicher Darstellung das Fahrgestell 12 aus der Blickrichtung von vorne rechts. Im Vordergrund ist die Deichsel 5 zu erkennen, sowie die Pumpe 13, welche direkt am Längsholm 4a angeflanscht ist. Die beiden Längsholme 4a und 4b erstrecken sich zwischen den Rädern 10 und 11 sowie zwischen den Rädern 8 und 9 bis zum Heck des Fahrgestells 12. Am Heck verbindet die Quertraverse 7 die beiden Längsholme 4a und 4b. Da auch die Quertraverse 7 am Heck des Fahrgestells 12 als Hohlkörper ausgebildet ist, besteht eine für die Gülle G passierbare Verbindung zwischen den Hohlräumen der Längsholme 4a und 4b und dem Hohlraum der Quertraverse 7.

Wie bereits beschrieben und in Figur 6 detaillierter dargestellt, ist an der Quertraverse 7 eine Vorrichtung 16 zur Ausbringung der Gülle G angebracht. Diese Ausbringvorrichtung 16 verfügt über ein vorgeschaltetes Ventil 17, mit dessen Hilfe der Strom der Gülle G in die gewünschten Bahnen gelenkt werden kann. Zum Einen kann das Ventil 17 gesperrt werden, so dass die Gülle G am Ventil 17 ansteht. Um Beschädigungen der Pumpe 13 zu vermeiden muss in dieser Stellung des Ventils 17 die Förderung der Pumpe 13 gestoppt werden. Dazu ist eine nicht dargestellte, weil an sich bekannte Abschalteinrichtung vorhanden, die abhängig von der Stellung des Ventils 17 die Pumpe 13 abschalten kann. In einer zweiten Stellung des Ventils 17 wird die Gülle G in Richtung des Pfeils 18 in den Gülletank T des Gülletankwagens 1 gepumpt und füllt diesen. Die Pumpe 13 fördert dazu aus einem nicht dargestellten Vorratsbehälter die Gülle G durch die Pumpe 13 und den Hohlraum des Längsholms 4a - der dabei die Funktion einer Druckleitung übernimmt - zu dem Ventil 17 und dieses leitet in seiner zweiten Stellung die Gülle G in den Gülletank T, der eine Verbindung zu dem Ventil 17 aufweist, was durch den Pfeil 18 symbolisiert wird. In einer weiteren, dritten Stellung des Ventils 17 wird die Gülle G von der Pumpe 13 durch den hohlen Längsholm 4a und das Ventil 17 zu der Ausbringvorrichtung 16 gepumpt und mit Hilfe von an sich bekannten Vorrichtungen auf dem zu düngenden Boden verteilt. In dieser Stellung des Ventils 17 nimmt die Gülle G den durch Pfeil 19 symbolisierten Verlauf.

Als Ausbringvorrichtung 16 sind beispielsweise Düsenverteiler, Schleppschlauchverteiler oder Bodeninjektions-Verteiler möglich.

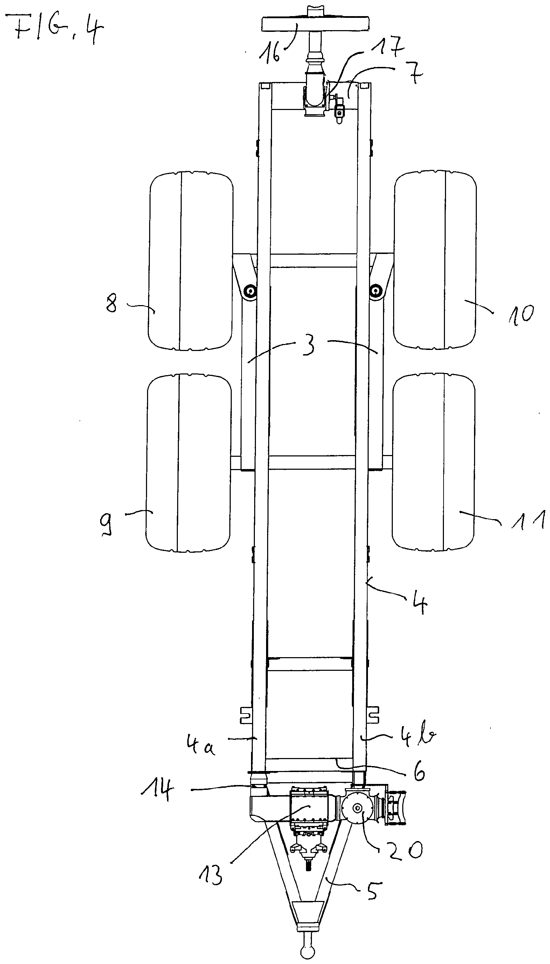

In Figur 4 ist das Fahrgestell 12 in Draufsicht dargestellt. Es versteht sich, dass nicht nur - wie bisher beschrieben - in dem Längsholm 4a Gülle gefördert werden kann, auch der Längsholm 4b kann diese Funktion übernehmen und beispielsweise eine Druckleitung darstellen oder ein Teil der Saugleitung sein. Das Anflanschen der Pumpe muss in diesem Fall dann allerdings an einer offenen Stelle des Längsholms 4b erfolgen. Da die Quertraverse 7 beide Längsholme 4a und 4b verbindet kann bei dieser Variation die Quertraverse 7 unverändert als Querleitung dienen.

In Figur 5 ist etwas detaillierter dargestellt, wie die Pumpe 13 am Längsholm 4a angeflanscht ist. Bei der mechanischen Verbindung der Pumpe 13 und dem Längsholm 4a mittels Anschlussflansch 14 kann ein elastisches Element 15 zwischengeschaltet sein, das sowohl niederfrequente Schwingungen als auch höherfrequente Vibrationen aufnimmt und zusätzlich die Verbindung zwischen Pumpe 13 und Längsholm 4a abdichtet. Die Pumpe 13 weist sowohl eine Austrittsseite 13a als auch eine Eintrittseite auf, die mit 13e bezeichnet ist. An der Austrittsseite 13a erfolgt das Anflanschen an den Längsholm 4a. Der Eintrittseite 13e ist ein ähnliches Ventil vorgeschaltet, wie am Heck des Fahrgestells 12. Dieses Ventil trägt das Bezugszeichen 20 und kann ebenfalls als Mehr-Wege-Ventil ausgeführt sein. Eine erste Stellung stellt die "Füllstellung" dar. Ein Pfeil 21 symbolisiert den Güllestrom von einem nicht dargestellten Vorratsbehälter durch die Pumpe 13 in den als Druckleitung fungierenden Längsholm 4a zum Heck des Fahrgestells 12. Dort wird je nach Stellung des Ventils 17 die Gülle G in den Gülletank T gefüllt, oder die Gülle wird am geschlossenen Ventil 17 gestoppt, was zum Abschalten der Pumpe 13 führen würde. Die dritte Stellung des Ventils 17 führt dazu dass die vorne aus dem Vorratsbehälter gepumpte Gülle G

hinten gleich wieder zum Verteiler gepumpt wird. In diesem Fall kann der Tankwagen - mittels Schlauchanschluß statt dem Verteiler - als fahrende Pumpe dienen zum Umfüllen von stationären Behältern. Wenn der Gülletankwagen 1 gefüllt ist, wird das vordere Ventil 20 seine Eingangsseite zum Vorratsbehälter sperren, weil keine weitere Gülle G entnommen werden soll. Die Pumpe 13 könnte darauf hin abgeschaltet werden. Da im Allgemeinen Gülle G jedoch Schwebstoffe enthält, die sich in ruhender Gülle G absetzen - was meistens aber nicht erwünscht ist - kann das Ventil 20 eine zweite Stellung einnehmen, die als "Umwälzen" bezeichnet werden kann. In dieser Stellung besteht eine offenen Verbindung zwischen dem Gülletank T und einer Eintrittseite des Ventils 20. Bei dieser Stellung des Ventils 20 kann das Ventil 17 in seiner zweiten Stellung so geschaltet sein; dass es die Gülle G in Richtung des Pfeils 18 in den Gülletank T leitet. Da eingangsseitig das Ventil 20 eine offene Verbindung zum Gülletank T hergestellt hat und die Pumpe 13 im Betrieb ist, wird die Gülle G vorne aus dem Gülletank T herausgepumpt und hinten wieder hineingepumpt. Diesen Pumpvorgang nennt man "Umwälzen" und er dient dazu, das Absetzen von Schwebstoffen im Gülletank T zu verhindern. Sobald das hintere Ventil 17 in seine dritte Stellung "Ausbringen" umgeschaltet wird, entnimmt die Pumpe 13 über das Ventil 20 vorne die Gülle G aus dem Gülletankwagen 1 und pumpt es durch den Längsholm 4a zum hinteren Ventil 17, welches die Gülle G nun über die Ausbringvorrichtung 16 auf dem zu düngenden Acker verteilt.

Die vorstehende Funktionsbeschreibung entspricht sinngemäß den Vorgängen bei Gülletankwagen gemäß dem Stand der Technik. Die Besonderheit der erfindungsgemäßen Lösung liegt vor allem darin, dass größtenteils keine separaten Leitungen zum Fördern der Gülle von einem Ende des Gülletankwagens zum anderen Ende erforderlich sind. Diese vorteilhafte Ausgestaltung des Rahmens 4 erbringt eine erhebliche Gewichtsersparnis, da zusätzliche Rohre entfallen können. Des Weiteren müssen die Leitungen erst gar nicht angefertigt und auch nicht montiert werden. Dies erspart einen erheblichen Anteil von Fertigungs- und Montagezeit sowie einen spürbaren Materialaufwand. Außer dem reduzierten Gewicht bedeutet gespartes Material natürlich auch Schonung der Ressourcen.

Zudem wird Platz gespart, was der Bodenfreiheit und damit der Geländegängigkeit des Gülletankwagens 1 zugutekommt. Der konstruktive Aufwand wird auch dadurch geringer, dass die fehlenden Förderleitungen die Beweglichkeit der Achsen hinsichtlich Federweg, Pendelweg, Lenkung nicht behindern können, was die Konstruktion erleichtert.

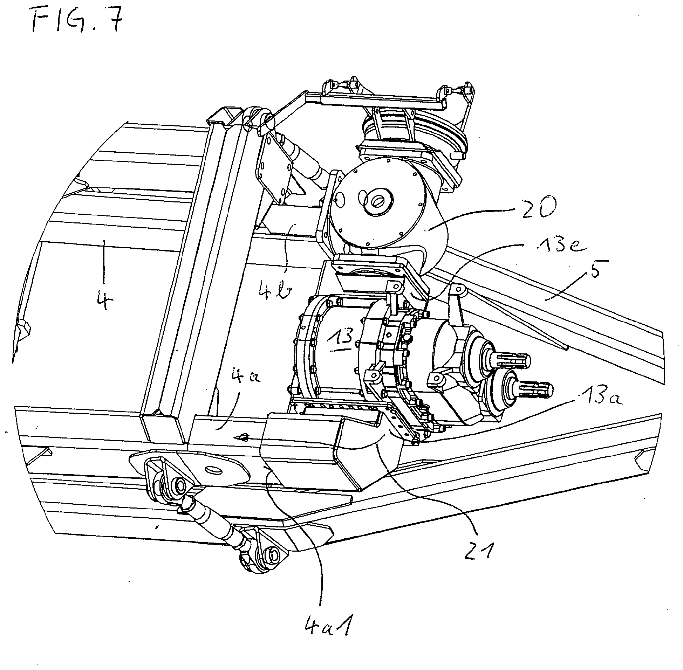

In Figur 7 ist eine Variante der Bauform aus Figur 5 gezeigt. Abweichend von der dort beschriebenen Darstellung ist bei dieser Ausführungsform die Pumpe 13 unmittelbar am Längsholmen 4a angeflanscht, also direkt an dem Rahmen 4. Die direkt angeflanschte Pumpe 13 erspart einen separaten Träger für die Pumpe, was wiederum eine konstruktive aber auch fertigungstechnische Ersparnis bedeutet. Analog kann auch in nicht dargestellter Weise das weitere Ventil 17 am Heck des Güllefahrzeugs 1 direkt am Rahmen 4 angeflanscht sein. Diese Bauform dient der besseren Versteifung des Rahmens 4. Die weiteren angedeuteten Bauelemente entsprechen in ihrer Funktion denen aus der Figur 5 und sind mit den gleichen Bezugszeichen versehen.

Die als Förderleitungen fungierenden Hohlkörper des Rahmens 4 können jede Form von Querschnitt aufweisen, am gebräuchlichsten sind Vierkantrohre oder zylindrische Rohre. Zur Verbesserung der Haltbarkeit sollten die Rohre zumindest innen einen korrosionsfesten Schutzüberzug aufweisen. Am einfachsten ist es, die Rohre zu verzinken. Aber auch andere Beschichtungen sind möglich. Ebenso ist es vorstellbar, dass in die Hohlkörper geeignete Schläuche eingezogen werden, wenn dies sinnvoll erscheint.

Der erfindungsgemäße Gülletankwagen kann als ein- oder mehr-achsiger Anhänger aufgebaut sein.

### Bezugszeichenliste

- 1: Tankfahrzeug
- 2: Tandemachse
- 3: Achsträger
- 4: Rahmen
- 4a: Längsholm
- 4a1: Stirnseite des Längsholms
- 4b: Längsholm
- 5: Deichsel
- 6: Quertraverse
- 7: Quertraverse
- 8: Rad
- 9: Rad
- 10: Rad
- 11: Rad
- 12: Fahrgestell
- 13: Güllepumpe
- 13a: Pumpen-Austrittsseite
- 13b: Pumpen-Eintrittsseite
- 14: Flansch
- 15: Elastisches Element
- 16: Ausbringvorrichtung
- 17: Mehrwegeventil
- 18: Strömungsrichtungs-Pfeil
- 19: Strömungsrichtungs-Pfeil
- 20: Mehrwegeventil
- 21: Strömungsrichtungs-Pfeil
- G: Gülle
- T: Gülletank

## Patentansprüche

1. Tankfahrzeug (1), insbesondere Gülleanhänger mit einem Gülletank (T), einem Fahrgestell (12) zur Aufnahme von zumindest Achsen (2), Rädern (8, 9, 10, 11), Deichsel (5) und Gülletank (T), **dadurch gekennzeichnet, dass**
- das Fahrgestell (12) aus einem von Hohlkörpern (4a, 4b, 6, 7) gebildeten Rahmen (4) besteht,
- die Hohlkörper (4a, 4b, 6, 7) Rohre sind,
- der Rahmen (4) aus den Rohren flüssigkeitsdicht zusammengesetzt ist,
- zumindest in einem Teil der Hohlkörper (4a) Gülle (G) förderbar ist, welche mit dem Tankfahrzeug (1) transportiert wird,
- die Hohlkörper (4a, 4b, 6, 7)
- Rohre sind, welche unmittelbar als Förderleitungen dienen, oder
- in ihrem Innern korrosionsfeste Innenrohre oder Schläuche aufweisen.

2. Tankfahrzeug (1) nach Anspruch 1, **dadurch gekennzeichnet, dass** der Rahmen (4) aus den Rohren (4a, 4b, 6, 7) flüssigkeitsdicht zusammengesetzt, nämlich geschweißt ist.

3. Tankfahrzeug (1) nach Anspruch 1 oder 2, **dadurch gekennzeichnet, dass** die Rohre korrosionsfest beschichtet sind.

4. Tankfahrzeug (1) nach einem der Ansprüche 1 bis 3, **dadurch gekennzeichnet, dass** der Rahmen (4) aus Längsholmen (4a, 4b) und Quertraversen (6, 7) besteht, deren Hohlräume zumindest teilweise miteinander verbunden sind.

5. Tankfahrzeug (1) nach einem der vorherigen Ansprüche, **dadurch gekennzeichnet, dass** eine Güllepumpe (13) derart an dem zur Förderung der Gülle (G) dienenden Hohlkörper (4a) angeflanscht ist, dass die Förderung der Gülle (G) über die Güllepumpe (13) direkt im Rahmen (4) erfolgt.

6. Tankfahrzeug (1) nach Anspruch 5, **dadurch gekennzeichnet, dass** die Güllepumpe (13) mittels eines Anschlussflanschs (14) an den Hohlkörper (4a) angeflanscht ist, und dass der Anschlussflansch (14) gleichzeitig als Pumpenträger fungiert.

7. Tankfahrzeug (1) nach wenigstens einem der vorstehenden Ansprüche, **dadurch gekennzeichnet, dass** zwischen dem Hohlkörper (4a) und der Güllepumpe (13) wenigstens ein elastisches Element (15) angeordnet ist.

8. Tankfahrzeug (1) nach Anspruch 5, **dadurch gekennzeichnet, dass** die Güllepumpe (13) direkt an den Hohlkörper (4a) angeflanscht ist, und dass der Rahmen (4) gleichzeitig als Pumpenträger fungiert.

9. Tankfahrzeug (1) nach wenigstens einem der vorstehenden Ansprüche, **dadurch gekennzeichnet, dass** Mehrwegventile (17, 20) zur Steuerung des Gülleflusses vorhanden sind, und dass die Ventile (17, 20) unmittelbar auf dem Rahmen (4) oder an einer Pumpe (13) angeordnet sind.

10. Tankfahrzeug (1) nach wenigstens einem der vorstehenden Ansprüche, **dadurch gekennzeichnet, dass** das Tankfahrzeug (1) als ein- oder mehr-achsiger Anhänger ausgebildet ist.

## Claims

1. Tanker (1), in particular liquid manure trailer with a liquid manure tank (T), a chassis (12) for accommodating at least axles (2), wheels (8, 9, 10, 11), a drawbar (5) and a liquid manure tank (T),
**characterized in that**
- the chassis (12) consists of a frame (4) formed from hollow bodies (4a, 4b, 6, 7),
- the hollow bodies (4a, 4b, 6, 7) are pipes,
- the frame (4) is assembled in a fluid-tight manner from the pipes,
- liquid manure (G) which is transported by the tanker (1) can be conveyed at least in some of the hollow bodies (4a),
- the hollow bodies (4a, 4b, 6, 7)
- are pipes which serve directly as conveying lines, or
- have corrosion-proof inner pipes or hoses in their interior.

2. Tanker (1) according to Claim 1, **characterized in that** the frame (4) is assembled, namely welded, in a fluid-tight manner from the pipes (4a, 4b, 6, 7).

3. Tanker (1) according to Claim 1 or 2, **characterized in that** the pipes are coated so as to be corrosion-proof.

4. Tanker (1) according to one of Claims 1 to 3, **characterized in that** the frame (4) consists of longitudinal struts (4a, 4b) and crosspieces (6, 7), the cavities of which are at least partially connected to one another.

5. Tanker (1) according to one of the preceding claims, **characterized in that** a liquid manure pump (13) is flange-mounted in such a manner on the hollow body (4a) serving to convey the liquid manure (G) that the conveying of the liquid manure (G) via the liquid manure pump (13) takes place directly in the frame (4).

6. Tanker (1) according to Claim 5, **characterized in that** the liquid manure pump (13) is flange-mounted onto the hollow body (4a) by means of a connecting flange (14), and **in that** the connecting flange (14) acts at the same time as the pump support.

7. Tanker (1) according to at least one of the preceding claims, **characterized in that** at least one elastic element (15) is arranged between the hollow body (4a) and the liquid manure pump (13).

8. Tanker (1) according to Claim 5, **characterized in that** the liquid manure pump (13) is flange-mounted directly onto the hollow body (4a), and **in that** the frame (4) acts at the same time as the pump support.

9. Tanker (1) according to at least one of the preceding claims, **characterized in that** there are multi-way valves (17, 20) for controlling the flow of liquid manure, and **in that** the valves (17, 20) are arranged directly on the frame (4) or at a pump (13).

10. Tanker (1) according to at least one of the preceding claims, **characterized in that** the tanker (1) is designed as a single- or multi-axle trailer.

## Revendications

1. Véhicule citerne (1), en particulier remorque à lisier avec une citerne à lisier (T), un châssis de roulage (12) destiné à recevoir au moins des essieux (2), des roues (8, 9, 10, 11), un timon (5) et une citerne à lisier (T), **caractérisé en ce que**
- le châssis de roulage (12) se compose d'un cadre (4) formé par des corps creux (4a, 4b, 6, 7),
- les corps creux (4a, 4b, 6, 7) sont des tubes,
- le cadre (4) est composé des tubes de façon étanche au liquide,
- du lisier (G) qui est convoyé avec le véhicule citerne (1) peut être transporté au moins dans une partie des corps creux (4a),
- les corps creux (4a, 4b, 6, 7)
- sont des tubes, qui servent directement comme conduites de transport, ou
- présentent intérieurement des tubes intérieurs résistants à la corrosion ou des gaines souples.

2. Véhicule citerne (1) selon la revendication 1, **caractérisé en ce que** le cadre (4) est constitué, notamment soudé, des tubes (4a, 4b, 6, 7) de façon étanche au liquide.

3. Véhicule citerne (1) selon la revendication 1 ou 2, **caractérisé en ce que** les tubes sont munis d'un revêtement résistant à la corrosion.

4. Véhicule citerne (1) selon l'une quelconque des revendications 1 à 3, **caractérisé en ce que** le cadre (4) se compose de longerons (4a, 4b) et de traverses (6, 7), dont les cavités sont au moins partiellement raccordées entre elles.

5. Véhicule citerne (1) selon l'une quelconque des revendications précédentes, **caractérisé en ce qu'**une pompe à lisier (13) est bridée sur le corps creux (4a) servant pour le transport du lisier (G), de telle manière que le transport du lisier (G) se fasse directement dans le cadre (4) par la pompe à lisier (13).

6. Véhicule citerne (1) selon la revendication 5, **caractérisé en ce que** la pompe à lisier (13) est bridée sur le corps creux (4a) au moyen d'une bride de raccordement (14), et **en ce que** la bride de raccordement (14) fait en même temps office de support de pompe.

7. Véhicule citerne (1) selon au moins une des revendications précédentes, **caractérisé en ce qu'**au moins un élément élastique (15) est disposé entre le corps creux (4a) et la pompe à lisier (13).

8. Véhicule citerne (1) selon la revendication 5, **caractérisé en ce que** la pompe à lisier (13) est bridée directement sur le corps creux (4a), et **en ce que** le cadre (4) fait en même temps office de support de pompe.

9. Véhicule citerne (1) selon au moins une des revendications précédentes, **caractérisé en ce qu'**il se trouve des vannes multivoies (17, 20) pour la commande du flux de lisier, et **en ce que** les vannes (17, 20) sont disposées directement sur le cadre (4) ou sur une pompe (13).

10. Véhicule citerne (1) selon au moins une des revendications précédentes, **caractérisé en ce que** le véhicule citerne (1) est réalisé sous la forme d'une remorque à un ou plusieurs essieu(x).
